# EUROPÄISCHE PATENTANMELDUNG

(11) **EP 4 629 593 A2**
(43) Veröffentlichungstag der Anmeldung: **08.10.2025**
(21) Anmeldenummer: 25191866.0
(22) Anmeldetag: 07.11.2024
(51) Int. Cl.: H04L 61/30

(54) **VERFAHREN ZUR BEREITSTELLUNG EINES KOMMUNIKATIONSKANALS ZWISCHEN WENIGSTENS ZWEI FAHRZEUGEN**

(30) Priorität: 21.12.2023 DE 102023005293
(62) Teilanmeldung aus: 24805437.1
(71) Anmelder: Mercedes-Benz Group AG, 70372 Stuttgart (DE)
(72) Erfinder: MIX, Bianca, 70376 Stuttgart (DE); HEMPE, Nico, 72072 Tübingen (DE); SCHINDEWOLF, Peter, 72810 Gomaringen (DE); JACOB, Ansger, 71088 Holzgerlingen (DE); HAHN, Steffen, 71093 Weil im Schönbuch (DE)
(74) Vertreter: Buchta, Hao

(57) **Zusammenfassung**

Die Erfindung betrifft ein Verfahren zur Bereitstellung eines Kommunikationskanals zwischen wenigstens zwei Fahrzeugen (1). Das erfindungsgemäß Verfahren ist gekennzeichnet durch die folgenden Verfahrensschritte:
- Erzeugen eines Identifikations-Token (2) durch eine Recheneinheit jeweils in wenigstens einem ersten (1.1) und einem zweiten Fahrzeug (1.2);
- Versetzen eines Telekommunikationsmoduls in einen Sende/Empfangs-Modus, wobei das Telekommunikationsmodul im Sende/Empfangs-Modus den auf der Recheneinheit vorgehaltenen Identifikations-Token (2) fortwährend per Funk versendet und über Funk versendete Identifikations-Token (2) empfängt;
- Darstellen der vom Sende/Empfangs-Modul zumindest aktuell empfangenen Identifikations-Token (2) auf einer Anzeigevorrichtung (3);
- Auswahl eines auf der Anzeigevorrichtung (3) dargestellten Identifikations-Token (2);
- Versenden einer Kommunikationskanalöffnungsanfrage;
- Bestätigung der Kommunikationskanalöffnungsanfrage; und
- Öffnen eines Kommunikationskanals zwischen den beiden Telekommunikationsmodulen im ersten (1.1) und zweiten Fahrzeug (1.2).

## Beschreibung

Die Erfindung betrifft ein Verfahren zur Bereitstellung eines Kommunikationskanals zwischen wenigstens zwei Fahrzeugen.

Verkehrsteilnehmer sind während der Nutzung ihres Fahrzeugs, abgesehen von Kleinstfahrzeugen wie beispielsweise E-Scooter, nicht ohne weiteres dazu in der Lage direkt miteinander zu kommunizieren. Es ist zwar möglich durch das gegenseitige Betrachten eine Information durch eine bestimmte Gestik oder Mimik anzudeuten, eine umfangreiche verbale Kommunikation oder das Austauschen von Textnachrichten ist jedoch nicht möglich. Hierzu müssten die Verkehrsteilnehmer aussteigen oder zumindest ein Fenster des Fahrzeugs öffnen, um miteinander zu sprechen oder anderweitige Kontaktinformationen austauschen, beispielsweise eine Handynummer oder E-Mailadresse. Dies ist jedoch aufwändig und kann vom Fahrgeschehen ablenken.

Es wäre jedoch wünschenswert einen direkten Kommunikationskanal zwischen mehreren Verkehrsteilnehmern bereitstellen zu können, was es Fahrzeuginsassen erlaubt miteinander im Stau oder stoppendem Verkehr zu kommunizieren, wodurch sich Langeweile vermeiden lässt. Auch können so andere Verkehrsteilnehmer vor Gefahren gewarnt werden, beispielsweise vor Schlaglöchern, vereisten Fahrbahnabschnitten, einem auf der Fahrbahn liegenden Hindernis und dergleichen. Auch könnten so Beschädigungen oder Defekte gemeldet werden, beispielsweise dass das über den rechten Frontscheinwerfer eines benachbarten Fahrzeugs abgebbares Abblendlicht nicht funktioniert. Zur Wahrung des Datenschutzes sollte eine solche Kommunikation bevorzugt anonym oder zumindest pseudonymisiert erfolgen.

Generell ist es bekannt, dass Fahrzeuge untereinander oder auch mit Infrastruktur drahtlos Informationen austauschen können. Hierzu sind die verschiedensten Fahrzeug-zu-Fahrzeug oder Fahrzeug-zu-X Kommunikationsschnittstellen bekannt. Moderne Fahrzeuge verfügen zudem meist über eine sogenannte Telekommunikationseinheit, die es erlaubt Daten per Mobilfunk an einen über das Internet erreichbaren Server zu übermitteln.

Ferner ist das Aufbauen von sogenannten ad-hoc-Netzwerken bekannt. Bei einem ad-hoc-Netz handelt es sich um ein Funknetz, welches ohne die Teilhabe von zentralen Netzwerkknoten bzw. stationärer Infrastruktur bereitgestellt wird. Das Netz wird selbstständig, also durch die teilnehmenden Netzwerkknoten, aufgebaut und konfiguriert. Über das Funknetz auszutauschende Daten werden über einen oder mehrere Netzwerkknoten weitergereicht, um zu ihrem Empfänger zu gelangen. Ad-hoc-Netzwerke können für den Datenaustausch zwischen mobilen Endgeräten wie Smartphones genutzt werden. Zum Aufbauen eines solchen ad-hoc-Netzes können beispielsweise die Dienste Apple AirDrop der Firma Apple INC. oder der Dienst Google Nearby Share der Firma Google LLC verwendet werden. Dabei bauen jeweilige mobile Endgeräte eine auf WLAN und Bluetooth basierende Kommunikation auf, um Daten wie beispielsweise Fotos, Videos, Kontakte oder MP3-Files auszutauschen.

Zur Warnung und Nachverfolgung potentieller Ansteckungen mit dem SARS-CoV-2 Virus wurden verschiedene sogenannte Corona-Warn-Apps entwickelt, auch als Covid-19-App bezeichnet. Eine solche App erlaubt es Kontaktpersonen nachzuverfolgen, um Infektionsketten aufzudecken und nachverfolgen zu können. Hierzu kann in der App die Funktion "Risiko-Ermittlung" aktiviert werden, was dazu führt, dass das entsprechende Smartphone per Bluetooth Low Energy in regelmäßigen Intervallen einen tokenbasierten Identifikator versendet. Der tokenbasierte Identifikator kann nach regelmäßigen Zeitintervallen, beispielsweise alle 10 bis 20 Minuten, aus einem tagesaktuell gültigen Schlüssel neu generiert werden. Dadurch wechselt der tokenbasierte Identifikator für jeden Nutzer regelmäßig, was eine eindeutige Zuordnung jeweiliger Identifikatoren zu Personen und damit das Schließen auf die Identität des Nutzers erschwert oder gar unmöglich macht. Die App prüft ebenfalls in regelmäßigen Zeitintervallen, ob von anderen in der Nähe befindlichen Smartphones entsprechende tokenbasierte Identifikatoren ausgesendet werden und speichert diese nach dem Empfang. Nach einer Zeitdauer, beispielsweise 14 Tage, können die von anderen Geräten empfangenen Identifikatoren gelöscht werden. Infiziert sich ein Nutzer, so meldet der Nutzer dies einem zentralen Server. Der zentrale Server stellt dann die dem infizierten Nutzer zuzuordnenden tokenbasierten Identifikatoren für andere App-Nutzer zum Download bereit. Dies erlaubt es der auf einem jeweiligen Smartphone ausgeführten App festzustellen, ob ein Kontakt zu einer infizierten Person bestanden hat oder nicht.

Das Funktionsprinzip einer solchen Covid-19-App wird in patentrechtlicher Form beschrieben durch die US 2022/0051808 A1, welche ein System zur anonymen und verteilten Kontaktnachverfolgung und Verifikation offenbart.

Ferner offenbart die WO 2013/126747 A2 eine Plattform für drahtlose Identitätssender und ein System zur Nutzung von drahtloser Kurzdistanz-Übertragungen. Das System basiert auf dem Einsatz sogenannter drahtloser Identitätssender und Nachbereichsübertragungsempfänger. Die drahtlosen Identitätssender senden fortwährend einen tokenbasierten Identifikator, der von den Nahbereichsübertragungsempfängern empfangen werden kann. Jeweilige Token werden auf einem zentralen Server hinterlegt und können bei einem Empfang durch einen Nahbereichsübertragungsempfänger von diesem abgefragt werden. Dies erlaubt es dem Server ein Aufeinandertreffen der jeweiligen drahtlosen Identitätssender und Nahbereichsübertragungsempfänger zu erkennen. Die Nahbereichsübertragungsempfänger können eine Information über ihren Aufstellort vorhalten. Unter Auswertung dieser Information ist es möglich zumindest grob auch auf den Aufenthaltsort eines jeweiligen drahtlosen Identitätssenders zurückzuschließen. Ein Nahbereichsübertragungsempfänger kann an einem Fahrzeug wie einem Taxi befestigt werden. Wurde ein besagter Kontakt erkannt, so kann an einen hinterlegten Nutzer beispielsweise per SMS oder E-Mail eine Benachrichtigung verschickt werden, dass einem Nutzer zugeordneter drahtloser Identitätssender einen Kontakt zu einem jeweiligen Nahbereichsübertragungsempfänger hatte.

Zudem offenbart die DE 10 2021 119 013 A1 ein Fortbewegungsmittel und ein Verfahren zur Vorbereitung einer Drahtloskommunikation mit einem Verkehrsteilnehmer. Dabei senden Verkehrsteilnehmer eine Drahtlos-ID aus und werden durch einen gerichteten Sensor des Fortbewegungsmittels erfasst. Im Fortbewegungsmittel wird anhand dieser Informationen eine datentechnische Repräsentation der Verkehrsteilnehmer erstellt. Jeweilige Drahtlos-IDs werden dieser Repräsentation zugeordnet, sodass ein Nutzer des Fortbewegungsmittels in der Repräsentation zur Herstellung eines Kommunikationskanals zum respektiven Verkehrsteilnehmer einen jeweiligen Verkehrsteilnehmer auswählen kann.

Der vorliegenden Erfindung liegt die Aufgabe zugrunde ein Verfahren zur Bereitstellung eines Kommunikationskanals zwischen wenigstens zwei Fahrzeugen anzugeben, durch dessen Einsatz es unter Wahrung der Verkehrssicherheit schnell, einfach und zuverlässig möglich ist einen Kommunikationskanal zwischen wenigstens zwei Fahrzeugen zu öffnen.

Erfindungsgemäß wird diese Aufgabe durch einen Verfahren zur Bereitstellung eines Kommunikationskanals zwischen wenigstens zwei Fahrzeugen mit den Merkmalen des Anspruchs 1 gelöst. Vorteilhafte Ausgestaltungen und Weiterbildungen ergeben sich aus den hiervon abhängigen Ansprüchen.

Ein gattungsgemäßes Verfahren zur Bereitstellung eines Kommunikationskanals zwischen wenigstens zwei Fahrzeugen wird erfindungsgemäß durch die folgenden Verfahrensschritte weitergebildet:
- A: Erzeugen eines Identifikations-Token durch eine Recheneinheit jeweils in wenigstens einem ersten und einem zweiten Fahrzeug;
- B: Versetzen eines kommunikativ mit der Recheneinheit verbundenen Telekommunikationsmoduls, umfassend Mittel zur Etablierung einer funkbasierten Datenübertragung, in einen Sende/Empfangs-Modus, wobei das Telekommunikationsmodul im Sende/Empfangs-Modus den auf der Recheneinheit vorgehaltenen Identifikations-Token fortwährend per Funk versendet und über Funk versendete Identifikations-Token empfängt, jeweils durch das erste und zweite Fahrzeug;
- C: Darstellen der vom Sende/Empfangs-Modul zumindest aktuell empfangenen Identifikations-Token auf einer Anzeigevorrichtung an einen Nutzer, jeweils im ersten und zweiten Fahrzeug;
- D: Empfangen einer Bedienhandlung durch den Nutzer im ersten Fahrzeug, wobei die Bedienhandlung eine Auswahl eines auf der Anzeigevorrichtung dargestellten Identifikations-Token umfasst;
- E: Versenden einer Kommunikationskanalöffnungsanfrage vom Telekommunikationsmodul im ersten Fahrzeug an das Telekommunikationsmodul im zweiten Fahrzeug in Abhängigkeit des ausgewählten Identifikations-Token;
- F: Empfangen einer Bedienhandlung durch den Nutzer im zweiten Fahrzeug, wobei die Bedienhandlung eine Bestätigung der Kommunikationskanalöffnungsanfrage umfasst; und
- G: Öffnen eines Kommunikationskanals zwischen den beiden Telekommunikationsmodulen im ersten und zweiten Fahrzeug als Reaktion auf die Bestätigung der Kommunikationskanalöffnungsanfrage, wobei über den Kommunikationskanal zumindest im ersten Fahrzeug generierte Kommunikationsinformationen zur Ausgabe im zweiten Fahrzeug versendbar sind; wobei ferner erfindungsgemäß vorgesehen ist, dass
- die Kommunikationsinformationen mittelbar über eine zentrale Recheneinrichtung zwischen den beiden Telekommunikationsmodulen des ersten und zweiten Fahrzeugs ausgetauscht werden, wobei zum Aufbauen des Kommunikationskanals über die zentrale Recheneinrichtung das erste und zweite Fahrzeug die jeweils selbst erzeugten Identifikations-Token und die jeweils empfangenen Identifikations-Token an die zentrale Recheneinrichtung übermitteln, und wobei das erste Fahrzeug die Kommunikationskanalöffnungsanfrage an die zentrale Recheneinrichtung übermittelt, welche diese an das durch den in der Kommunikationskanalöffnungsanfrage enthaltenen Identifikations-Token definierte Fahrzeug weitervermittelt; und
- die zentrale Recheneinrichtung die Kommunikationskanalöffnungsanfrage nur dann an das zweite Fahrzeug weiter vermittelt, wenn die zentrale Recheneinrichtung den Identifikations-Token des ersten Fahrzeugs vom zweiten Fahrzeug empfängt.

Mit Hilfe des erfindungsgemäßen Verfahrens wird es Fahrzeugen bzw. den jeweiligen Fahrzeuginsassen der Fahrzeuge ermöglicht während der Teilhabe am Verkehrsgeschehen einen Kommunikationskanal zueinander aufzubauen und über diesen Kommunikationskanal Nachrichten miteinander auszutauschen. Dies ermöglicht eine Kommunikation der Fahrzeuginsassen miteinander. Dies kann beispielsweise zur Unterhaltung in Stausituationen genutzt werden oder auch zum Warnen von Fahrzeuginsassen vor Gefahrenstellen im Straßenverkehr oder zur Information über einen Defekt des Fahrzeugs bzw. einer Fahrzeugfunktion.

Bei dem Identifikations-Token handelt es sich im Grunde genommen um eine Kodierung, beispielsweise in Form einer Zeichenkette. Die Zeichenkette kann eine beliebige Anzahl an Ziffern, Buchstaben und/oder Sonderzeichen umfassen. Beispielsweise handelt es sich um eine Nummer. Es können bewährte Verfahren zur Generierung von Identifikations-Token angewendet werden. Dies ermöglicht es zuverlässig eindeutige und einzigartige Identifikations-Token zu erzeugen, sodass vermieden wird, dass mehrere Fahrzeuge bzw. mehrere in Fahrzeuge integrierte Recheneinheiten gleichzeitig dieselbe Kodierung als Identifikations-Token verwenden. Zur Generierung des Identifikations-Token werden mathematische Regeln, insbesondere aus der Kryptografie bekannte mathematische Regeln, angewendet. Insbesondere umfasst ein Identifikations-Token einen sogenannten Header und eine an den Header angehängte Nutzlast, auch als Payload bezeichnet. Der Header kann die entsprechende Kodierung umfassen, während in der Payload weitere Informationen gespeichert werden können, worauf im Folgenden noch näher eingegangen wird.

Das Telekommunikationsmodul umfasst Mittel zur Etablierung einer funkbasierten Datenübertragung. Hierzu können alle gängigen funkbasierten Datenübertragungstechnologien verwendet werden. Beispielsweise können Informationen per Bluetooth, Bluetooth Low Energy, Wi-Fi, ZigBee, oder auch per Mobilfunk, insbesondere unter Nutzung von 5G, versendet und empfangen werden. Entsprechend ist das Telekommunikationsmodul dazu in der Lage die unterschiedlichsten Kommunikationsprotokolle zu verarbeiten. Als Netzwerkprotokoll kann beispielsweise auch MQTT verwendet werden. Für den initialen Austausch der Identifikations-Token der in Funkreichweite zueinanderstehenden Fahrzeuge, bauen die Fahrzeuge über die Telekommunikationsmodule ein lokales ad-hoc-Netzwerk auf. Ergänzen können für einen weiteren Austausch Identifikations-Token auch auf einem weiteren Übertragungskanal übermittelt werden, worauf im Folgenden noch eingegangen wird.

Das durch eine jeweilige Recheneinheit generierte und vorgehaltene Identifikations-Token wird fortwährend per Funk versendet. Alle in Funkreichweite befindlichen Telekommunikationsmodule können dann den jeweiligen Identifikations-Token empfangen. Ein jeweiliges Identifikations-Token kann kontinuierlich oder auch zeitdiskret, beispielsweise nach regelmäßigen zeitlichen Intervallen, versendet werden. Die entsprechende Sende/Empfangsreichweite hängt vom verwendeten Funkstandard und dem zugrunde liegenden Kommunikationsprotokoll ab und kann in der Größenordnung von einigen wenigen Metern bis hin zu hunderten oder tausenden Metern reichen. Der verwendete Funkstandard kann fest vorgegeben sein oder auch in Abhängigkeit verschiedener Randbedingungen unterschiedlich ausgewählt werden. Beispielsweise kann der Funkstandard und damit auch die Reichweite von der Fahrgeschwindigkeit des Fahrzeugs und/oder dem befahrenen Straßentyp abhängen. Bei einer Langsamfahrt, beispielsweise bei Stau oder stoppendem Verkehr, kann insbesondere ein Funkstandard mit einer reduzierten Reichweite gewählt werden, wie beispielsweise Bluetooth, insbesondere Bluetooth Low Energy, oder Wi-Fi. Bei einer schnellen Fahrt, beispielsweise ab einer Geschwindigkeit von 70 km/h, kann ein Funkstandard mit einer höheren Übertragungsreichweite aktiviert werden, beispielsweise 5G. Hierdurch kann dem mit zunehmender Fortbewegungsgeschwindigkeit der Fahrzeuge größeren Abstand zwischen den jeweiligen Fahrzeugen Rechnung getragen werden.

Aktuell in Reichweite befindliche Fahrzeuge können vom Fahrzeuginsassen des ersten Fahrzeugs für eine Kommunikation ausgewählt werden. Dies ist durch das Empfangen und Darstellen der von den jeweiligen Fahrzeugen empfangenen Identifikations-Token auf der Anzeigevorrichtung möglich. Beispielsweise können die Identifikations-Token bzw. die jeweiligen Kodierungen, beispielsweise besagte Zeichenketten, in Form einer Liste dargestellt werden. Unter Berücksichtigung von Abstandsinformationen kann insbesondere diese Liste entsprechend des Abstands der jeweiligen Fahrzeuge zum ersten Fahrzeug sortiert sein. Solche Abstandsinformationen lassen sich beispielsweise durch eine Laufzeitsignalmessung oder auch per Triangulation bestimmen. Andere Methoden infrage, woraufhin im Folgenden noch näher eingegangen wird.

Da lediglich Identifikations-Token bzw. die jeweiligen zugrunde liegenden Kodierungen angezeigt werden, ist es möglich, eine Kommunikation anonym bzw. pseudonymisiert herzustellen.

Zur Eingabe von Bedienhandlungen können bewährte Bedienelemente im Fahrzeug genutzt werden, wie beispielsweise Knöpfe, Taster, Drehregler, Schieberegler und dergleichen. Insbesondere ist die Anzeigevorrichtung als berührungsempfindliche Anzeigevorrichtung ausgeführt, was die Auswahl jeweiliger Identifikations-Token per Touch-Eingabe erlaubt.

Um zu verhindern, dass ein Nutzer Kommunikationsinformationen in ein anderes Fahrzeug übermittelt, obwohl dies von den Fahrzeuginsassen des Fahrzeugs nicht erwünscht ist, ist es erforderlich, das jeweilige Fahrzeuginsassen eine entsprechende Kommunikationskanalöffnungsanfrage erst bestätigen müssen, damit besagter Kommunikationskanal aufgebaut wird. Zur Ausgabe der Kommunikationsinformationen können verschiedene Übertragungswege genutzt werden, wie insbesondere akustische, visuelle und/oder haptische Übertragungswege.

Wie oben beschrieben ist es vorgesehen, dass die Kommunikationsinformationen mittelbar über eine zentrale Recheneinrichtung zwischen den beiden Telekommunikationsmodulen des ersten und zweiten Fahrzeugs ausgetauscht werden, wobei zum Aufbauen des Kommunikationskanals über die zentrale Recheneinrichtung das erste und zweite Fahrzeug die jeweils selbst erzeugten Identifikations-Token und die jeweils empfangenen Identifikations-Token an die zentrale Recheneinrichtung übermitteln, und wobei das erste Fahrzeug die Kommunikationskanalöffnungsanfrage an die zentrale Recheneinrichtung übermittelt, welche diese an das durch den in der Kommunikationskanalöffnungsanfrage enthaltenen Identifikations-Token definierte Fahrzeug weitervermittelt. Mit anderen Worten verläuft die Kommunikation mittelbar über die zentrale Recheneinrichtung und nicht über besagtes ad-hoc-Netzwerk. Insbesondere handelt es sich bei der zentralen Recheneinrichtung um einen an das Internet angeschlossenen Server bzw. Serververbund. Die Fahrzeuge können Daten per Mobilfunk an das Internet übertragen und so Informationen mit der zentralen Recheneinrichtung austauschen. Dies erlaubt auch das Aufrechterhalten einer Kommunikation, sollten sich das erste und zweite Fahrzeug aus ihrer jeweiligen Funkreichweite entfernen.

Da die zentrale Recheneinrichtung lediglich kodierte Informationen in Form der Identifikations-Token empfängt, ist es der zentralen Recheneinrichtung nicht möglich entsprechende Nutzeridentitäten festzustellen. Insbesondere können so auch keine Bewegungsprofile von Nutzern angelegt und nachverfolgt werden.

Es vermittelt die zentrale Recheneinrichtung die Kommunikationskanalöffnungsanfrage nur dann an das zweite Fahrzeug weiter, wenn die zentrale Recheneinrichtung den Identifikations-Token des ersten Fahrzeugs vom zweiten Fahrzeug empfängt. Dies bedeutet mit anderen Worten, dass das zweite Fahrzeug der zentralen Recheneinrichtung mitteilt, dass das erste Fahrzeug in Kommunikationsreichweite zum zweiten Fahrzeug ist. Hierdurch lässt sich ein Missbrauch verhindern, bei dem ein Nutzer des ersten Fahrzeuge Kommunikationsinformationen an ein zweites Fahrzeug versenden möchte, auch wenn sich das zweite Fahrzeug überhaupt nicht in Kommunikationsreichweite zum ersten Fahrzeug aufhalten sollte.

Eine vorteilhafte Weiterbildung des erfindungsgemäßen Verfahrens sieht dabei vor, dass die Kommunikationsinformationen zumindest einen der folgenden Inhalte umfassen:
- Textnachrichten, insbesondere eine vorgefertigte Textnachricht;
- mittels eines Mikrofons aufgezeichnete Sprachnachrichten; und/oder
- ein von einer Kamera erzeugter Videostrom.

Somit ist es möglich, dass jeweilige Fahrzeuginsassen über die verschiedensten Ein- und Ausgabemittel miteinander kommunizieren können. Über eine entsprechende Tastatur können Textnachrichten eingegeben werden und zwischen den Fahrzeugen ausgetauscht werden. Eine Textnachricht kann auch von einem Nutzer diktiert werden und von einem Computer in eine Zeichenkette gewandelt werden. Zumindest wird eine Textnachricht vom ersten Fahrzeug an das zweite Fahrzeug übertragen. Eine Textnachricht kann frei von einem Nutzer verfasst werden, oder aber es können auch lediglich vorgefertigte Textnachrichten versendet werden. Eine solche vorgefertigte Textnachricht könnte beispielsweise lauten: "Frontscheinwerfer defekt". Insbesondere können vorgefertigte Textnachrichten nach Gruppen sortiert sein, beispielsweise geordnet nach den Themen: "Gefahrenstelle melden", "Fahrzeugdefekt melden", "Transportdienstleistung", und dergleichen.

Ebenfalls können in den Fahrzeugen mittels Mikrofon Sprachnachrichten aufgezeichnet werden, was er ermöglicht, entsprechende Sprachnachrichten zu übertragen. Auch kann eine Live-Kommunikation erfolgen, also ein Telefonat geführt werden. Eine entsprechende Sprachnachricht kann vorteilhafterweise durch einen im Fahrzeug aufgezeichneten Videostrom ergänzt werden. So können kurze Videobotschaften zwischen den Fahrzeugen verschickt werden oder auch eine Videotelefonie bereitgestellt werden.

Generell kann zwischen neuen Kommunikationspartnern und bekannten Kommunikationspartnern unterschieden werden. Nutzer bzw. Fahrzeuge, mit denen bereits eine Kommunikation erfolgt ist, können in einem jeweiligen Fahrzeug bzw. einer entsprechenden Recheneinheit gespeichert werden. Hierzu werden Identifikations-Token von Fahrzeugen mit denen eine Kommunikation erfolgte für eine längere Zeitdauer in einer jeweiligen Recheneinheit, beispielsweise in einem Adressbuch, gespeichert.

Insbesondere für bekannte Kontakten kann eine umfangreichere Kommunikation freigeschaltet werden. Beispielsweise können mit unbekannten Kontakten lediglich vorgefertigte Textnachrichten ausgetauscht werden und mit bekannten Kontakten frei eingegebene Textnachrichten sowie besagte Sprachnachrichten und/oder Videobotschaften.

Bevorzugt erfolgt die Kommunikation zwischen den Fahrzeugen spätestens nach dem Öffnen des Telekommunikationskanals kryptografisch abgesichert. Hierzu können bewährte kryptografische Verschlüsselungstechnologien angewendet werden.

Entsprechend einer weiteren vorteilhaften Ausgestaltung des erfindungsgemäßen Verfahrens hält eine Recheneinheit in einem dritten Fahrzeug eine Übergehungsinformation vor, welche beim Versenden einer Kommunikationskanalöffnungsanfrage vom Telekommunikationsmodul im dritten Fahrzeug an die Kommunikationskanalöffnungsanfrage angehängt wird, wobei ein die Kommunikationskanalöffnungsanfrage vom dritten Fahrzeug empfangendes Telekommunikationsmodul den Kommunikationskanal zum Telekommunikationsmodul im dritten Fahrzeug unter Interpretation der Übergehungsinformation als Bestätigung der Kommunikationskanalöffnungsanfrage öffnet. Dies ermöglicht es autorisierten Fahrzeugen bzw. Nutzern das Aufbauen eines Kommunikationskanals zu erzwingen. Dies ist insbesondere für spezielle Einrichtungen bzw. Institutionen, beispielsweise Notfalleinsatzkräfte wie die Polizei, die Feuerwehr oder Rettungssanitäter, vorteilhaft, um im Notfall Informationen an die Fahrzeuginsassen von in der Nähe befindlichen Fahrzeugen übermitteln zu können. Somit können Einsatzkräfte entsprechende Warnnachrichten in den in der Nähe befindlichen Fahrzeugen anzeigen und/oder eine verbale Kommunikation initiieren, ohne dass die jeweiligen Fahrzeuginsassen zuerst die Kommunikationskanalöffnungsanfrage manuell bestätigen müssen. Hierdurch lässt sich verhindern, dass Fahrzeuginsassen eine solche Kommunikationskanalöffnungsanfrage blockieren, obwohl eine entsprechende Notsituation das Ausgeben entsprechender Kommunikationsinformationen erfordern kann. Beispielsweise können Einsatzkräfte so einen Fahrzeugnutzer dazu auffordern eine Rettungsgasse freizumachen.

Gemäß einer nicht unter den Schutzumfang der Erfindung fallenden Ausführungsform des Verfahrens können die Kommunikationsinformationen unmittelbar zwischen den beiden Telekommunikationsmodulen des ersten und zweiten Fahrzeugs miteinander ausgetauscht werden. Somit basiert die Datenübertragung entsprechender Kommunikationsinformationen ebenfalls auf dem Versenden von Informationen über ein entsprechendes ad-hoc-Netzwerk. Beispielsweise können jeweilige Fahrzeuge entsprechende Informationen unmittelbar miteinander per Wi-Fi austauschen. Dies hat den Vorteil, dass keine sonstigen Akteure an der Kommunikation beteiligt sind, was den Datenschutz verbessert. Nachteilig ist daran jedoch, dass die Kommunikation zusammenbricht, wenn die Fahrzeuge die Funkreichweite zueinander verlassen.

Entsprechend einer weiteren vorteilhaften Ausgestaltung des erfindungsgemäßen Verfahrens ist es ferner vorgesehen, dass die zentrale Recheneinrichtung die vom ersten Fahrzeug selbst erzeugten und die vom ersten Fahrzeug von anderen Fahrzeugen zu einem beliebigen Zeitpunkt empfangenen Identifikations-Token zumindest temporär speichert und einen Kommunikationskanal zwischen dem ersten und einem vierten Fahrzeug öffnet, wobei das erste Fahrzeug den Identifikations-Token des vierten Fahrzeugs zu einem früheren Zeitpunkt, nicht jedoch aktuell empfängt. Mit anderen Worten ist es somit möglich, dass ein Kommunikationskanal zu einem bekannten Kommunikationspartner aufgebaut werden kann, auch wenn der jeweilige Kommunikationspartner gerade nicht in Kommunikationsreichweite zum ersten Fahrzeug ist. Dabei ist es generell auch denkbar, dass die Nutzer des ersten und vierten Fahrzeugs ihre jeweiligen Identifikations-Token auch über einen separaten Kommunikationskanal miteinander austauschen, beispielsweise per SMS, E-Mail, Kurznachrichtendienst oder dergleichen. Zur Übertragung von Identifikations-Token können fahrzeuginterne und fahrzeugexterne Kommunikationsmittel verwendet werden. In den jeweiligen Fahrzeugen kann dann der auf diesem Weg empfangene Identifikations-Token bzw. die zugrunde liegende Kodierung automatisch, beispielsweise aus besagter E-Mail, ausgelesen werden oder auch durch einen Nutzer manuell eingegeben werden und so in der jeweiligen Recheneinheit hinterlegt werden. Mit anderen Worten können so die jeweiligen Fahrzeugnutzer Kontaktinformationen zur Öffnung besagten Kommunikationskanals austauschen. So können weit entfernt zueinander befindliche Fahrzeugnutzer miteinander kommunizieren, beispielsweise ein erster Fahrzeugnutzer, der sich gerade in Berlin aufhält, und ein vierter Fahrzeugnutzer, der sich gerade in Stuttgart aufhält. In diesem Falle werden die Kommunikationsinformationen mittelbar über die zentrale Recheneinrichtung zwischen den Fahrzeugen weitervermittelt.

Eine weitere vorteilhafte Ausgestaltung des erfindungsgemäßen Verfahrens sieht ferner vor, dass eine jeweilige Recheneinheit beim Erzeugen oder vor dem Versenden eines Identifikations-Token weitere Informationen an den Identifikations-Token anhängt, insbesondere einen aktuellen Aufenthaltsort des die Recheneinheit umfassenden Fahrzeugs und/oder einen Alias-Namen. Hierdurch können neue Funktionalitäten bereitgestellt werden. Besagte weitere Informationen können, wie bereits erwähnt, als Payload in einen jeweiligen Identifikations-Token aufgenommen werden. Auch ist es denkbar entsprechend weitere Informationen in Form von computerlesbaren Informationen bzw. Dateien an einen Identifikations-Token anzuhängen. Mit Hilfe eines Alias-Namen können jeweilige Fahrzeugnutzer intuitiver nachvollziehen, wer mit wem kommunizieren möchte. Ein solcher Alias-Name kann beispielsweise ein Pseudonym sein, beispielsweise in Form eines sogenannten Nicknames wie "RasendeMaus". Wenn dies gewünscht ist, können Nutzer auch ihren Klarnamen als Alias-Namen verwenden. Insbesondere können Klarnamen für bekannte Kontakte angezeigt werden, während unbekannten Kontakten pseudonymisierte Namen angezeigt werden.

Jeweilige Fahrzeuge können ihren aktuellen Aufenthaltsort beispielsweise mit Hilfe eines globalen Navigationssatelittensystems wie GPS bestimmen. Hierzu können jeweilige Fahrzeuge einen entsprechenden Empfänger zum Empfangen von GPS-Signalen, beispielsweise in Form eines Navigationssystems, umfassen. Beispielsweise kann die zentrale Recheneinrichtung die an einen jeweiligen Identifikations-Token angehängten Aufenthaltsorte miteinander abgleichen, um zu überprüfen, ob die jeweiligen Fahrzeuge sich tatsächlich in Kommunikationsreichweite zueinander aufhalten. Wir bereits erwähnt, kann dann die zentrale Recheneinrichtung Kommunikationsinformationen nur dann weiterleiten, wenn sich die jeweiligen Fahrzeuge tatsächlich in Kommunikationsreichweite zueinander befinden.

Entsprechend einer weiteren vorteilhaften Ausgestaltung des erfindungsgemäßen Verfahrens wird der aktuelle Aufenthaltsort ausschließlich unmittelbar zwischen verschiedenen Telekommunikationsmodulen übertragen. Dies bedeutet, dass der Aufenthaltsort nicht an die zentrale Recheneinrichtung übermittelt wird. Dies erhöht den Datenschutz noch weiter, da somit die zentrale Recheneinrichtung keine Verknüpfung zwischen Identifikations-Token und Aufenthaltsorten herstellen kann. Somit können auch keine Bewegungsprofile rekonstruiert werden. Das erfindungsgemäße Verfahren erfordert das unmittelbare Austauschen von Identifikations-Token zwischen den zueinander in Kommunikationsreichweite befindlichen Telekommunikationsmodulen über das ad-hoc-Netzwerk. Der Austausch einer den Aufenthaltsort beschreibenden Information kann dann zusammen mit den Identifikations-Token über das ad-hoc-Netzwerk erfolgen.

Eine weitere vorteilhafte Ausgestaltung des erfindungsgemäßen Verfahrens sieht ferner vor, dass die Recheneinheit im ersten Fahrzeug den Aufenthaltsort des ersten Fahrzeugs mit den Aufenthaltsorten von weiteren Fahrzeugen abgleicht, für jedes Fahrzeug eine Relativposition gegenüber dem ersten Fahrzeug ermittelt und die weiteren Fahrzeuge in einer auf der Anzeigevorrichtung im ersten Fahrzeug angezeigten Umgebungsdarstellung entsprechend der jeweiligen Relativposition gegenüber dem ersten Fahrzeug anzeigt. Dies kann es den Fahrzeuginsassen im ersten Fahrzeug erleichtern ein Fahrzeug bzw. jeweilige Fahrzeuginsassen zum Aufbauen des Kommunikationskanals auszuwählen. Beispielsweise können die Fahrzeuginsassen im ersten Fahrzeug einen Defekt eines Fahrzeugs oder einer Fahrzeugfunktion eines benachbarten oder vorausfahrenden Fahrzeugs feststellen. Beispielsweise ist das rechte Rücklicht des Vordermanns kaputt. Nun stellt sich die Frage für die Fahrzeuginsassen des ersten Fahrzeugs, welchen auf der Anzeigevorrichtung dargestellten Identifikations-Token sie auswählen müssen, um dem vorausfahrenden Fahrzeug mit dem kaputten Rücklicht eine entsprechende Information zukommen zu lassen. Durch die örtliche Darstellung auf der Anzeigevorrichtung ist dies besonders intuitiv und einfach möglich. Beispielsweise kann auf der Anzeigevorrichtung eine Straße dargestellt werden, auf der das eigene Fahrzeug mittig fährt. Jeweilige benachbarte Fahrzeuge werden entsprechend ihrer ermittelten Relativposition zu dem auf der Anzeigevorrichtung dargestellten Egofahrzeug angezeigt. So können die Fahrzeuginsassen im ersten Fahrzeug per Touch-Eingabe das entsprechende Nachbarfahrzeug auswählen und somit ein Kommunikationskanal zu genau diesem Fahrzeug aufbauen.

Eine jeweilige Kommunikationskanalöffnungsanfrage kann dabei bereits eine Nachricht enthalten, wie beispielsweise "Kommunikationskanalöffnungsanfrage durch ein Nachbarfahrzeug. Thema: Meldung eines Defekts". Dies kann die Bereitschaft der Fahrzeuginsassen erhöhen eine entsprechende Kommunikationskanalöffnungsanfrage, insbesondere von einem unbekannten Kontakt, zu bestätigen.

Entsprechend einer weiteren vorteilhaften Ausgestaltung des erfindungsgemäßen Verfahrens wird ein jeweiliger Identifikations-Token nach Ablaufen einer festgelegten Zeitdauer oder nach Erfüllen eines Kriteriums neu generiert. Hierdurch lässt sich der Datenschutz noch zuverlässiger wahren. Da die jeweiligen einem Nutzer zugeordneten Identifikations-Token so fortwährend wechseln, wird das Erkennen von Mustern eines bestimmten Nutzers oder das Zuordnen von Informationen zu entsprechenden Nutzern erschwert oder gar unmöglich gemacht. Es können unterschiedliche festgelegte Zeitdauern verwendet werden, wie beispielsweise einige wenige Minuten oder auch Stunden, Tage, Wochen oder Monate. Auch kann der einem Nutzer bzw. Fahrzeug zugeordnete Identifikations-Token nach Erfüllen eines Kriteriums neu generiert werden. Es kommen die verschiedensten Kriterien infrage, wie beispielsweise das Vorliegen einer bestimmten Uhrzeit oder eines bestimmten Kalenderdatums, das Neustarten der Antriebsmaschine des Fahrzeugs, das Entriegeln der Fahrzeugtüren, das Zurücklegen einer festgelegten Distanz mit dem Fahrzeug, das Durchführen einer turnusmäßigen Wartung oder dergleichen.

Bevorzugt vermittelt die zentrale Recheneinrichtung, wenn zumindest einmal ein Kommunikationskanal zwischen dem ersten und zweiten Fahrzeug geöffnet wurde, einen im zweiten Fahrzeug neu generierten Identifikations-Token an das erste Fahrzeug weiter, auch wenn das erste und zweite Fahrzeug nicht in Funkreichweite zueinander stehen. Dies ermöglicht es bei sich ändernden Identifikations-Token den Kontakt zu bekannten Kommunikationspartnern zu wahren. Würde sich ein Identifikations-Token ändern, ohne dass dies dem ersten Fahrzeug vermittelt wird, so könnte das erste Fahrzeug dem entsprechenden Fahrzeug, beispielsweise besagtem zweiten Fahrzeug, keine Kommunikationsinformationen mehr zusenden und umgekehrt. Die jeweiligen Fahrzeuge versenden die durch die Recheneinheit generierten Identifikations-Token ohnehin an die zentrale Recheneinrichtung. Die zentrale Recheneinrichtung kann jeweilige Identifikations-Tokenänderungen nachverfolgen. Jeweilige Identifikations-Token können in Form von Listen oder auch einer jeweiligen Blockchain geführt werden. Soll nun aus dem ersten Fahrzeug ein Kommunikationskanal zum zweiten Fahrzeug geöffnet werden, so kann die zentrale Recheneinrichtung den aktuellen Identifikations-Token des zweiten Fahrzeugs verwenden. Wird der aktuelle Identifikations-Token des zweiten Fahrzeugs über die zentrale Recheneinrichtung dem ersten Fahrzeug mitgeteilt, so kann auch das erste Fahrzeug den aktuellen Identifikations-Token des zweiten Fahrzeugs zum Aufbauen eines Kommunikationskanals verwenden.

Entsprechend einer weiteren vorteilhaften Ausgestaltung des erfindungsgemäßen Verfahrens bewirkt die Recheneinheit im ersten Fahrzeug die Ausgabe einer Hinweisnachricht, sobald im ersten Fahrzeug ein Identifikations-Token von einem weiteren Fahrzeug empfangen wird, zudem bereits zumindest einmal ein Kommunikationskanal geöffnet wurde. Die Recheneinheit im ersten Fahrzeug kann somit einmal empfangene Identifikations-Token speichern und aktuell empfangene Identifikations-Token mit den in einer entsprechenden Liste vorgehaltenen Identifikations-Token abgleichen. Somit kann das erste Fahrzeug feststellen, wenn ein weiteres Fahrzeug die Funkreichweite des ersten Fahrzeugs betritt, mit dem zumindest einmal eine Kommunikation erfolgt ist. Ist dies der Fall, so können entsprechende Hinweisnachrichten an die Fahrzeuginsassen im ersten Fahrzeug ausgegeben werden. So könnten nämlich die Fahrzeuginsassen im ersten Fahrzeug daran interessiert sein, erneut eine Kommunikation mit den Fahrzeuginsassen des bekannten Fahrzeugs durchzuführen. Durch das Ausgeben der Hinweisnachricht lassen sich die jeweiligen Fahrzeuginsassen darüber informieren, dass ein bekannter Kontakt in Reichweite ist und ein entsprechender Kommunikationskanal zu diesem Kontakt aufgebaut werden kann. Entsprechende Hinweisnachrichten können im ersten Fahrzeug sowohl akustisch, visuell als auch haptisch ausgegeben werden. Beispielsweise kann auf der Anzeigevorrichtung ein Piktogramm auftauchen, welches veranschaulicht, dass ein bekannter Kontakt in Kommunikationsreichweite ist und ein entsprechender Kommunikationskanal nun geöffnet werden kann. Die Darstellung des Piktogramms kann durch die Ausgabe eines entsprechenden Hinweistons und/oder beispielsweise einer Lenkradvibration ergänzt werden.

Eine weitere vorteilhafte Ausgestaltung des erfindungsgemäßen Verfahrens sieht es ferner vor, dass die zentrale Recheneinrichtung, sollten das erste Fahrzeug und das weitere Fahrzeug nicht in Funkreichweite zueinander stehen, den Identifikations-Token des weiteren Fahrzeugs an das erste Fahrzeug weitervermittelt, sobald die Bordelektronik im weiteren Fahrzeug aktiviert wird. Dies ermöglicht es der Recheneinheit im ersten Fahrzeug den Identifikations-Token des weiteren Fahrzeugs zu empfangen, auch wenn dieses nicht in Funkreichweite zum ersten Fahrzeug steht. Somit kann auch ein Kommunikationskanal für weit zueinander entfernte Fahrzeuge geöffnet werden. Dabei vermittelt die zentrale Recheneinrichtung den Identifikations-Token des weiteren Fahrzeugs dann weiter, wenn die Bordelektronik im weiteren Fahrzeug aktiviert wird. Dies bedeutet, dass jeweilige Fahrzeuginsassen nun das weitere Fahrzeug zum Durchführen einer Fahrt nutzen. Erst in einem solchen Fall ist es auch sinnvoll eine entsprechende Kommunikation zwischen den Fahrzeuginsassen bereitzustellen.

Entsprechend einer weiteren vorteilhaften Ausgestaltung des erfindungsgemäßen Verfahrens übernimmt ein mobiles Endgerät, umfassend eine Recheneinheit und ein Telekommunikationsmodul, die Rolle eines im vorigen beschriebenen Fahrzeugs, sodass die Recheneinheit im mobilen Endgerät die Verfahrensschritte A bis C ausführt und wobei die Verfahrensschritte D, E und G durch die Recheneinheit ausgeführt werden oder die Verfahrensschritte F und G durch die Recheneinheit ausgeführt werden. Somit kann ein Kommunikationskanal nicht nur zwischen Fahrzeugen, sondern auch zwischen Fahrzeugen und mobilen Endgeräten aufgebaut werden. Dies ermöglicht es den Fahrzeuginsassen auch mit anderen Verkehrsteilnehmern wie Fußgängern, Radfahrern, Inlineskatern, Skateboardfahrern und dergleichen zu kommunizieren.

Dabei wird auf einer jeweiligen Recheneinheit in einem computerlesbaren Speichermedium ein Computerprogrammprodukt vorgehalten, wiederum umfassend computerinterpretierbare Anweisungen, die einen Prozessor der Recheneinheit dazu in die Lage versetzten, entsprechende Verfahrensschritte des erfindungsgemäßen Verfahrens bereitzustellen. Ein solches Computerprogrammprodukt sowie computerlesbares Speichermedium sind somit ebenfalls Teil der Erfindung.

Weitere vorteilhafte Ausgestaltungen des erfindungsgemäßen Verfahrens zur Bereitstellung eines Kommunikationskanals zwischen wenigstens zwei Fahrzeugen ergeben sich auch aus den Ausführungsbeispielen, welche nachfolgend unter Bezugnahme auf die Figuren näher beschrieben werden.

Dabei zeigen:
- Fig. 1: eine schematische Draufsicht auf mehrere nebeneinander fahrende Fahrzeuge;
- Fig. 2: eine schematische Darstellung des Anzeigeinhalts einer fahrzeuginternen Anzeigevorrichtung;
- Fig. 3: eine schematische Darstellung der von einer zentralen Recheneinrichtung aktuell empfangenen Identifikations-Token; und
- Fig. 4: eine weitere schematische Darstellung des Anzeigeinhalts der Anzeigevorrichtung.

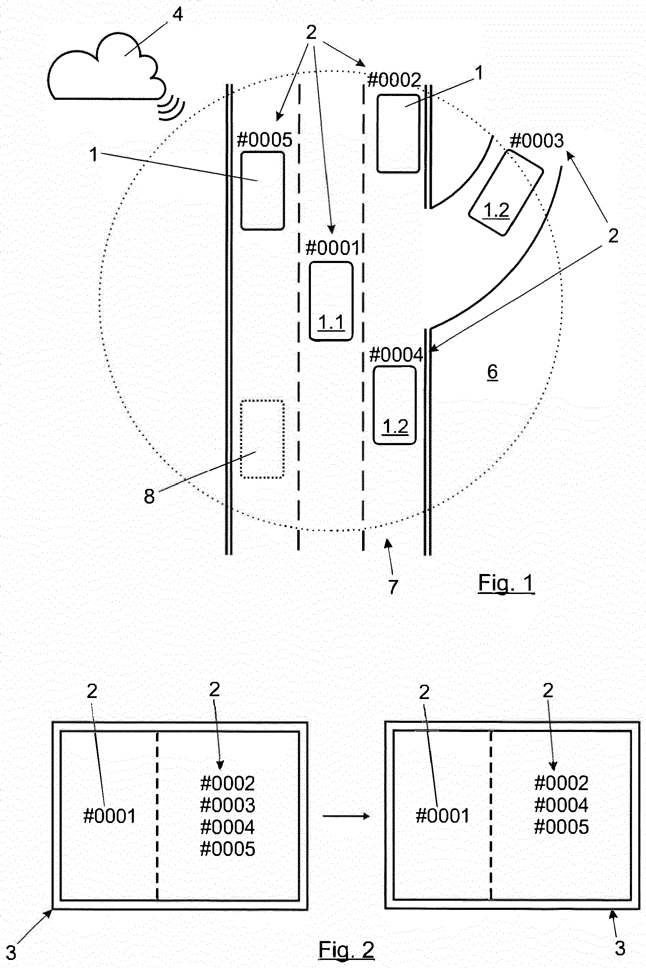

Figur 1 zeigt mehrere auf einer Fahrbahn 7 fahrende Fahrzeuge 1. Für die Fahrzeuginsassen der Fahrzeuge 1 kann es wünschenswert sein, eine Kommunikation mit den jeweiligen im Umfeld befindlichen Verkehrsteilnehmern durchzuführen. Um dies zu ermöglichen, führen die Fahrzeuge 1 ein erfindungsgemäßes Verfahren zur Bereitstellung eines Kommunikationskanals aus. Ein ebenfalls auf der Fahrbahn 7 fahrendes Fahrzeug 8 nimmt nicht am erfindungsgemäßen Verfahren teil.

Jeweilige in den Fahrzeugen 1 integrierte Recheneinheiten erzeugen ein Identifikations-Token 2 und versenden dieses mittels eines fahrzeuginternen Telekommunikationsmoduls per Funk. Hierzu wird ein jeweiliges Telekommunikationsmodul zumindest im Betrieb des jeweiligen Fahrzeugs 1 in einen Sende/Empfangs-Modus geschaltet. Der Sende/Empfangs-Modus kann manuell aktivierbar und deaktivierbar sein oder auch automatisch, beispielsweise beim Aktivieren der Bordelektronik bzw. Starten der Zündung des jeweiligen Fahrzeugs 1 oder ab dem Erreichen einer bestimmten Fahrgeschwindigkeit. Eine Funkreichweite 6 des Telekommunikationsmoduls des Fahrzeugs 1.1 ist in Figur 1 dargestellt. Die jeweiligen Identifikations-Token 2 der Fahrzeuge 1 sind hier beispielhaft durch die Kodierungen #0001 bis #0005 gekennzeichnet. Generell kann eine solche Kodierung eine beliebig lange Zeichenkette, aufweisend unter Anderem Buchstaben, Ziffern, Sonderzeichen und dergleichen, umfassen.

Beispielsweise ist ein Frontscheinwerfer des dem Fahrzeug 1.1 hinterfahrenden Fahrzeugs 1.2 mit dem Identifikations-Token 2: #0004 defekt, woraufhin ein Fahrzeuginsasse des Fahrzeugs 1.1 dies dem Fahrzeuginsassen des entsprechenden Fahrzeugs mitteilen möchte. Auch könnten die Fahrzeuginsassen des Fahrzeugs 1.1 und des Fahrzeugs 1.2 mit dem Identifikations-Token 2: #0003 befreundet sein und daher regelmäßig beim Pendeln miteinander chatten wollen.

Figur 2 zeigt eine mögliche Darstellung eines Anzeigeinhalts einer fahrzeuginternen Anzeigevorrichtung 3. In einem linken durch eine durchgestrichelte Linie abgegrenzten Teilbereich auf der Anzeigevorrichtung 3 wird der im eigenen Fahrzeug erzeugte und aktuell vorgehaltene bzw. aktive Identifikations-Token 2 dargestellt. Figur 2 zeigt somit den Anzeigeinhalt auf der Anzeigevorrichtung 3 im Fahrzeug 1.1. In einem rechten Teilbereich auf der Anzeigevorrichtung 3 werden alle aktuell vom Fahrzeug 1.1 empfangenen Identifikations-Token 2 von in Funkreichweite 6 befindlichen Fahrzeugen 1 dargestellt.

Das Fahrzeug 1.2 mit dem Identifikations-Token 2: #0003 befährt eine Abfahrt der Fahrbahn 7 und verlässt somit in Kürze die Funkreichweite 6 des Fahrzeugs 1.1. Figur 2 zeigt wie sich der Anzeigeinhalt der Anzeigevorrichtung 3 ändert. Sobald das Fahrzeug mit dem Identifikations-Token 2: #0003 die Funkreichweite 6 verlässt, kann auch der Identifikations-Token 2: #0003 nicht mehr empfangen werden, sodass er auf der Anzeigevorrichtung 3 auch nicht mehr dargestellt wird.

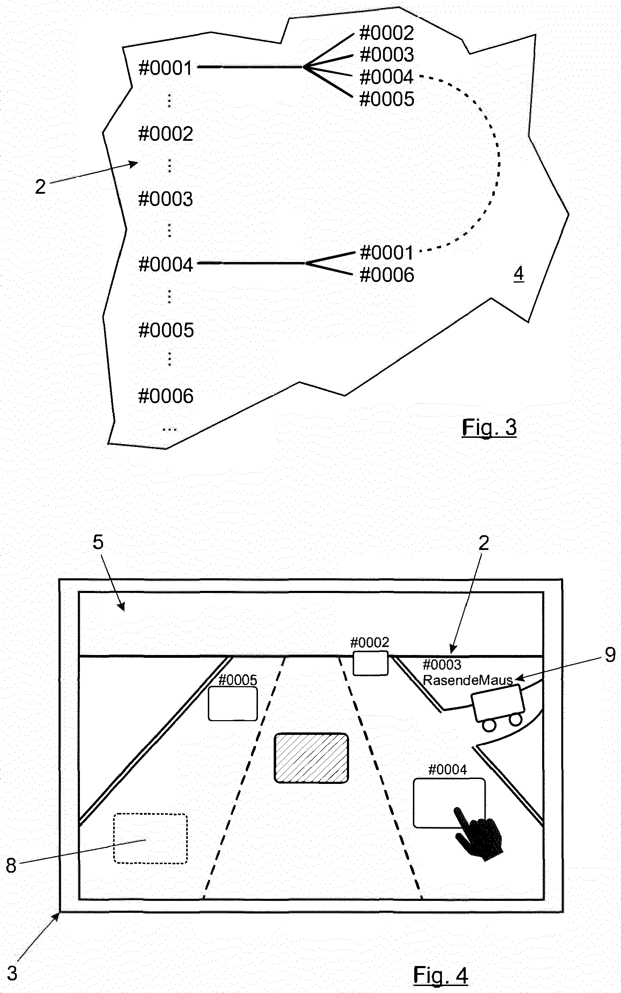

Zum Aufbauen eines Kommunikationskanals kann ein jeweiliger Fahrzeuginsasse über entsprechende Eingabemittel ein jeweiliges Identifikations-Token 2 auswählen, beispielsweise durch Berühren des jeweiligen Identifikations-Tokens 2 auf der Anzeigevorrichtung 3 (siehe Figur 4). Daraufhin versendet das jeweilige Fahrzeug eine Kommunikationskanalöffnungsanfrage an das respektive Fahrzeug 1.2, woraufhin nach Bestätigung der Kommunikationskanalöffnungsanfrage im jeweiligen Fahrzeug 1.2 der Kommunikationskanal geöffnet wird. Nun können Kommunikationsinformationen zwischen den Fahrzeugen 1.1 und 1.2 ausgetauscht werden. Generell ist es dabei auch denkbar, dass ein Kommunikationskanal gleichzeitig zu mehr als zwei Fahrzeugen 1 geöffnet wird. Als Kommunikationsinformationen können insbesondere Textnachrichten, Sprachnachrichten sowie ein von einer Kamera erzeugter Videostrom ausgetauscht werden.

Die jeweiligen Fahrzeuge 1 bauen per Funk ein ad-hoc-Netzwerk auf. So lassen sich entsprechende Identifikations-Token 2 unmittelbar zwischen den jeweiligen Telekommunikationsmodulen der Fahrzeuge 1 austauschen.

Erfindungsgemäß werden die Kommunikationsinformationen über eine zentrale Recheneinrichtung 4 zwischen den jeweiligen Fahrzeugen 1 ausgetauscht. Hierzu tauschen die Fahrzeuge 1 ihre Identifikations-Token 2 unmittelbar über das ad-hoc-Netzwerk miteinander aus und übertragen die jeweils selbst generierten Identifikations-Token 2 und die jeweils empfangenen Identifikations-Token 2 an die zentrale Recheneinrichtung 4. Besonders bevorzugt bauen die Fahrzeuge 1 untereinander ein ad-hoc-Netzwerk basierend auf einer Funktechnologie in Form von Bluetooth, Bluetooth Low Energy, Wi-Fi, ZigBee oder 5G auf sowie kommunizieren die Fahrzeuge 1 mit der zentralen Recheneinrichtung 4 über eine per Mobilfunk aufgebauten Kommunikationsverbindung über das Internet.

Figur 3 zeigt einen aktuellen Zustand der zentralen Recheneinrichtung 4, zeigend die jeweiligen aktuell empfangenen Identifikations-Token 2. Dabei ist für das Fahrzeug 1.1 mit dem Identifikations-Token 2: #0001 und das Fahrzeug 1.2 mit dem Identifikations-Token 2: #0004 dargestellt, welche Identifikations-Token 2 die jeweiligen Fahrzeuge 1.1, 1.2 aktuell empfangen. Erfindungsgemäß etabliert die zentrale Recheneinrichtung 4 nur dann eine Kommunikationsverbindung zwischen den jeweiligen Fahrzeugen 1.1, 1.2, wenn beide Fahrzeuge den jeweilige Identifikations-Token 2 des jeweils anderen Fahrzeugs 1.2, 1.1 empfangen. Dies ist in Figur 3 durch eine gestrichelte Linie angedeutet.

Figur 4 verdeutlicht eine weitere bevorzugte Ausführungsform des erfindungsgemäßen Verfahrens, welche es den Fahrzeuginsassen erleichtert das richtige Fahrzeug 1 zum Öffnen des Kommunikationskanals auszuwählen. So können die jeweiligen Fahrzeuge 1, beispielsweise unter Nutzung eines globalen Navigationssatelittensystems, ihren aktuellen Aufenthaltsort bestimmen und diesen untereinander, insbesondere über das ad-hoc-Netzwerk, austauschen. Beispielsweise kann der aktuelle Aufenthaltsort an ein jeweiliges Identifikations-Token 2 angehängt oder in dieses als Payload inkludiert werden. Dies ermöglicht es den jeweiligen Fahrzeugen 1 die Aufenthaltsposition der jeweils benachbarten Fahrzeuge 1 relativ zueinander zu ermitteln. Figur 4 zeigt eine entsprechende Darstellung auf der Anzeigevorrichtung 3. Das Fahrzeug 1.1 ist in der entsprechenden Umgebungsdarstellung 5 auf der Fahrbahn 7 mittig zentral dargestellt und durch eine Schraffur hervorgehoben. Somit können die Fahrzeuginsassen des Fahrzeugs 1.1 schnell und einfach erkennen, dass ein Kommunikationskanal zum Fahrzeug 1.2 mit dem Identifikations-Token 2: #0004 aufgebaut werden muss, um dessen Fahrzeuginsassen über den defekten Frontscheinwerfer zu informieren. Das Fahrzeug 8 kann ebenfalls auf der Anzeigevorrichtung 3 in der Umgebungsdarstellung 5 dargestellt werden. Das Fahrzeug 1.1 kann dabei eine Relativposition des Fahrzeugs 8 selbst ermitteln. Hierzu kann das Fahrzeug 1.1 entsprechende Umgebungserfassungsmittel, wie beispielsweise eine oder mehrere Mono- und/oder Stereokameras, Laserscanner wie ein LiDAR, Radarsensoren und/oder Ultraschallsensoren umfassen. Hierdurch können Tiefeninformationen gewonnen werden, die das Bestimmen entsprechender Relativabstände erlauben. Basierend auf derart generierten Tiefeninformationen kann auch ein von einem Fahrzeug 1 empfangener Aufenthaltsort validiert bzw. korrigiert werden.

Zwischen den Fahrzeugen 1.1 und 1.2 mit den Identifikations-Token 2: #0001 und #0003 hat in der Vergangenheit bereits öfter eine Kommunikation stattgefunden. Die jeweiligen Fahrzeuge bzw. Fahrzeuginsassen sind sich somit bekannt. In diesem Falle kann nicht nur die jeweilige Kodierung eines entsprechenden Identifikations-Token 2 auf der Anzeigevorrichtung 3 dargestellt werden, sondern auch ein Alias-Name 9, wie beispielsweise "RasendeMaus". Anstelle eines Pseudonyms können auch der Klarname eines jeweiligen Nutzers bzw. Fahrzeuginsassen dargestellt werden, wie beispielsweise "Karlheinz Schmidt". Jeweiligen Anzeige-Einstellungen können durch die an der Durchführung des erfindungsgemäßen Verfahrens beteiligten Nutzer selbstständig vorgenommen werden.

Bevorzugt können auch Benachrichtigungen an einen jeweiligen Fahrzeuginsassen ausgegeben werden, sobald ein Fahrzeug 1 die Kommunikationsreichweite 6 betritt, mit dem bereits zumindest einmal eine Kommunikation erfolgt ist, also deren Fahrzeuginsassen untereinander bekannt sind.

## Patentansprüche

1. Verfahren zur Bereitstellung eines Kommunikationskanals zwischen wenigstens zwei Fahrzeugen (1),
aufweisend die folgenden Verfahrensschritte:
- A: Erzeugen eines Identifikations-Token (2) durch eine Recheneinheit in wenigstens einem zweiten Fahrzeug (1.2);
- B: Versetzen eines kommunikativ mit der Recheneinheit verbundenen Telekommunikationsmoduls, umfassend Mittel zur Etablierung einer funkbasierten Datenübertragung, in einen Sende/Empfangs-Modus, wobei das Telekommunikationsmodul im Sende/Empfangs-Modus den auf der Recheneinheit vorgehaltenen Identifikations-Token (2) fortwährend per Funk versendet und über Funk versendete Identifikations-Token (2) empfängt, durch das zweite Fahrzeug (1.2);
- C: Darstellen der vom Sende/Empfangs-Modul zumindest aktuell empfangenen Identifikations-Token (2) auf einer Anzeigevorrichtung (3) an einen Nutzer, in einem ersten Fahrzeug (1.1);
- D: Empfangen einer Bedienhandlung durch den Nutzer im ersten Fahrzeug (1.1), wobei die Bedienhandlung eine Auswahl eines auf der Anzeigevorrichtung (3) dargestellten Identifikations-Token (2) umfasst;
- E: Versenden einer Kommunikationskanalöffnungsanfrage vom Telekommunikationsmodul im ersten Fahrzeug (1.1) an das Telekommunikationsmodul im zweiten Fahrzeug (1.2) in Abhängigkeit des ausgewählten Identifikations-Token (2);
- F: Empfangen einer Bedienhandlung durch den Nutzer im zweiten Fahrzeug (1.2), wobei die Bedienhandlung eine Bestätigung der Kommunikationskanalöffnungsanfrage umfasst; und
- G: Öffnen eines Kommunikationskanals zwischen den beiden Telekommunikationsmodulen im ersten (1.1) und zweiten Fahrzeug (1.2) als Reaktion auf die Bestätigung der Kommunikationskanalöffnungsanfrage, wobei über den Kommunikationskanal zumindest im ersten Fahrzeug (1.1) generierte Kommunikationsinformationen zur Ausgabe im zweiten Fahrzeug (1.2) versendbar sind,
**dadurch gekennzeichnet, dass**
- die Schritte A und B auch im ersten Fahrzeug (1.1) ausgeführt werden;
- der Schritt C auch im zweiten Fahrzeug (1.2) ausgeführt wird; und
- die Kommunikationsinformationen mittelbar über eine zentrale Recheneinrichtung (4) zwischen den beiden Telekommunikationsmodulen des ersten (1.1) und zweiten Fahrzeugs (1.2) ausgetauscht werden, wobei zum Aufbauen des Kommunikationskanals über die zentrale Recheneinrichtung (4) das erste (1.1) und zweite Fahrzeug (1.2) die jeweils selbst erzeugten Identifikations-Token (2) und die jeweils empfangenen Identifikations-Token (2) an die zentrale Recheneinrichtung (4) übermitteln, und wobei das erste Fahrzeug (1.1) die Kommunikationskanalöffnungsanfrage an die zentrale Recheneinrichtung (4) übermittelt, welche diese an das durch den in der Kommunikationskanalöffnungsanfrage enthaltenen Identifikations-Token (2) definierte Fahrzeug weitervermittelt; und
- die zentrale Recheneinrichtung (4) die Kommunikationskanalöffnungsanfrage nur dann an das zweite Fahrzeug (1.2) weitervermittelt, wenn die zentrale Recheneinrichtung (4) den Identifikations-Token (2) des ersten Fahrzeugs (1.1) vom zweiten Fahrzeug (1.2) empfängt.

2. Verfahren nach Anspruch 1,
**dadurch gekennzeichnet, dass**
die Kommunikationsinformationen zumindest einen der folgenden Inhalte umfassen:
- Textnachrichten, insbesondere eine vorgefertigte Textnachricht;
- mittels eines Mikrofons aufgezeichnete Sprachnachrichten; und/oder
- ein von einer Kamera erzeugter Videostrom.

3. Verfahren nach Anspruch 1 oder 2,
**dadurch gekennzeichnet, dass**
eine Recheneinheit in einem dritten Fahrzeug eine Übergehungsinformation vorhält, welche beim Versenden einer Kommunikationskanalöffnungsanfrage vom Telekommunikationsmodul im dritten Fahrzeug an die Kommunikationskanalöffnungsanfrage angehängt wird, wobei ein die Kommunikationskanalöffnungsanfrage vom dritten Fahrzeug empfangendes Telekommunikationsmodul den Kommunikationskanal zum Telekommunikationsmodul im dritten Fahrzeug unter Interpretation der Übergehungsinformation als Bestätigung der Kommunikationskanalöffnungsanfrage öffnet.

4. Verfahren nach einem der Ansprüche 1 bis 3,
**dadurch gekennzeichnet, dass**
die zentrale Recheneinrichtung (4) die vom ersten Fahrzeug (1.1) selbst erzeugten und die vom ersten Fahrzeug (1.1) von anderen Fahrzeugen (1) zu einem beliebigen Zeitpunkt empfangenen Identifikations-Token (2) zumindest temporär speichert und einen Kommunikationskanal zwischen dem ersten (1.1) und einem vierten Fahrzeug öffnet, wobei das erste Fahrzeug (1.1) den Identifikations-Token (2) des vierten Fahrzeugs zu einem früheren Zeitpunkt, nicht jedoch aktuell empfängt.

5. Verfahren nach einem der Ansprüche 1 bis 4,
**dadurch gekennzeichnet, dass**
eine jeweilige Recheneinheit beim Erzeugen oder vor dem Versenden eines Identifikations-Tokens (2) weitere Informationen an den Identifikations-Token (2) anhängt, insbesondere einen aktuellen Aufenthaltsort des die Recheneinheit umfassenden Fahrzeugs (1) und/oder einen Alias-Namen (9).

6. Verfahren nach Anspruch 5,
**dadurch gekennzeichnet, dass**
der aktuelle Aufenthaltsort ausschließlich unmittelbar zwischen verschiedenen Telekommunikationsmodulen übertragen wird.

7. Verfahren nach Anspruch 5 oder 6,
**dadurch gekennzeichnet, dass**
die Recheneinheit im ersten Fahrzeug (1.1) den Aufenthaltsort des ersten Fahrzeugs (1.1) mit den Aufenthaltsorten von weiteren Fahrzeugen (1) abgleicht, für jedes Fahrzeug (1) eine Relativposition gegenüber dem ersten Fahrzeug (1.1) ermittelt und die weiteren Fahrzeuge (1) in einer auf der Anzeigevorrichtung (3) im ersten Fahrzeug (1.1) angezeigten Umgebungsdarstellung (5) entsprechend der jeweiligen Relativposition gegenüber dem ersten Fahrzeug (1.1) anzeigt.

8. Verfahren nach einem der Ansprüche 1 bis 7,
**dadurch gekennzeichnet, dass**
ein jeweiliger Identifikations-Token (2) nach Ablaufen einer festgelegten Zeitdauer oder nach Erfüllen eines Kriteriums neu generiert wird.

9. Verfahren nach Anspruch 8,
**dadurch gekennzeichnet, dass**
die zentrale Recheneinrichtung (4), wenn zumindest einmal ein Kommunikationskanal zwischen dem ersten (1.1) und zweiten Fahrzeug (1.2) geöffnet wurde, einen im zweiten Fahrzeug (1.2) neu generierten Identifikations-Token (2) an das erste Fahrzeug (1.1) weitervermittelt, auch wenn das erste (1.1) und zweite Fahrzeug (1.2) nicht in Funkreichweite (6) zueinander stehen.

10. Verfahren nach einem der Ansprüche 1 bis 9,
**dadurch gekennzeichnet, dass**
die Recheneinheit im ersten Fahrzeug (1.1) die Ausgabe einer Hinweisnachricht bewirkt, sobald im ersten Fahrzeug (1.1) ein Identifikations-Token (2) von einem weiteren Fahrzeug (1) empfangen wird, zudem bereits zumindest einmal ein Kommunikationskanal geöffnet wurde.

11. Verfahren nach Anspruch 10,
**dadurch gekennzeichnet, dass**
die zentrale Recheneinrichtung (4), sollten das erste Fahrzeug (1.1) und das weitere Fahrzeug (1) nicht in Funkreichweite (6) zueinander stehen, den Identifikations-Token (2) des weiteren Fahrzeugs (1) an das erste Fahrzeug (1.1) weitervermittelt, sobald die Bordelektronik im weiteren Fahrzeug (1) aktiviert wird.

12. Verfahren nach einem der Ansprüche 1 bis 11,
**dadurch gekennzeichnet, dass**
ein mobiles Endgerät, umfassend eine Recheneinheit und ein Telekommunikationsmodul, die Rolle eines Fahrzeugs (1) übernimmt, sodass die Recheneinheit im mobilen Endgerät die Verfahrensschritte A bis C ausführt und wobei die Verfahrensschritte D, E und G durch die Recheneinheit ausgeführt werden oder die Verfahrensschritte F und G durch die Recheneinheit ausgeführt werden.
